# EUROPEAN PATENT SPECIFICATION

(11) **EP 2 343 446 B1**
(45) Date of publication and mention of the grant of the patent: **16.10.2013**
(21) Application number: 09824745.5
(22) Date of filing: 29.10.2009
(51) Int. Cl.: F02M 37/18, F02M 37/00, B60K 15/03, F02M 37/10, F02M 37/02

(54) **FUEL TANK**
KRAFTSTOFFBEHÄLTER
RESERVOIR DE COMBUSTIBLE

(30) Priority: 07.11.2008 JP 2008286410
(43) Date of publication of application: 13.07.2011
(73) Proprietor: Honda Motor Co., Ltd., Minato-ku Tokyo 107-8556 (JP)
(72) Inventor: MURABAYASHI Shinya, Wako-shi Saitama 351-0193 (JP); NAKAJIMA Takeaki, Wako-shi Saitama 351-0193 (JP)
(74) Representative: Prechtel, Jörg
(86) International application number: PCT/JP2009/068599
(87) International publication number: WO 2010/053045

(56) References cited:
- EP-A2- 0 806 318
- DE-A1- 19 900 378
- JP-A- 2 037 163
- JP-A- 10 061 515
- JP-A- 10 061 515
- JP-A- 63 093 626
- JP-A- 2004 232 547
- JP-A- 2004 278 529
- JP-B- 7 005 028

## Description

### Technical Field

The present invention relates to a fuel tank equipped with a fuel pump, a first reservoir portion in which the fuel pump is arranged and in which a fuel is retained, a second reservoir portion in which the fuel is retained, and a siphon tube disposed across the first reservoir portion and the second reservoir portion, suction being carried out in the siphon tube via the fuel pump, according to the preamble part of claim 1. A fuel tank of the generic kind is known from DE 199 00378 A1. In the following further relevant prior art will be discussed.

### Background Art

A fuel tank is used for supplying fuel to an internal combustion engine. For example, in a 4WD (four wheel drive) vehicle or a FR (front engine, rear drive) vehicle, in order to avoid the propeller shaft that passes through the center of the vehicle, a so-called saddle type fuel tank, in which the center of a bottom part of the fuel tank in the widthwise direction of the vehicle is recessed upwardly, has been adopted.

Generally, a saddle type fuel tank is divided into a first reservoir portion that retains fuel, and a second reservoir portion that also retains fuel therein. In the first reservoir portion and the second reservoir portion, systems are installed respectively for transporting (i.e., pumping) the fuel. For this reason, compared to a 2WD (two wheel drive) vehicle, two respective fuel pumping systems are required, which leads to a rise in cost and increases the scale of the fuel tank.

Thus, a fuel tank level balancing device is known, as disclosed in Japanese Laid-Open Patent Publication No. 10-061515. This apparatus, as shown in FIG. 5, includes a fuel tank 1 having two divided compartments 1a, 1b, and having a structure in which the fuel levels inside the divided compartments 1a, 1b are maintained in balance via a siphon 2.

A fuel pump module 3 is disposed in the divided compartment 1b, and in an outlet of the fuel pump module 3, a bypass pressure regulator 4 is disposed. A conduit pipe 5 is connected to an outlet of the regulator 4, whereby a liquid fuel is supplied through the conduit pipe 5 to a nozzle 6a of an injection pump 6. The injection pump 6 is operated by the liquid fuel, which is supplied to the nozzle 6a, such that fuel is suctioned through the interior of the siphon 2 from each of two respective fuel pickups 2a, 2b.

As a result thereof, the fuel levels in the divided compartments 1a, 1b are maintained in balance via the siphon 2, and the overall fuel level of the vehicle can be monitored with a single fuel level sensor 7. A fuel tank with a similar arrangement is known from EP 0 806 318 A2.

In the aforementioned Japanese Laid-Open Patent Publication No. 10-061515, the fuel pickups 2a, 2b, which are disposed at respective ends of the siphon 2, are arranged on the inside interior walls (inner walls that are mutually adjacent to each other) of the divided compartments 1a, 1b. Owing thereto, there is a concern that when the fuel tank 1 is inclined to the left or to the right upon parking of the vehicle, or when the vehicle is being driven around a curve, a greater than necessary amount of fuel will be transferred via the siphon.

In particular, in the case that the fuel tank 1 is inclined in the direction of the arrow A1, the fuel pickup 2b is disposed downwardly from (i.e., at a lower position than) a suction inlet 3a of the fuel pump module 3. Accordingly, almost all of the fuel in the divided compartment 1b becomes transferred, via the fuel pickup 2b, to the side of the divided compartment 1a. As a result, fuel cannot be supplied through the pump module 3, and the start-up performance of the engine is deteriorated.

### Summary of Invention

The present invention is made to resolve this type of problem. An object of the invention is to provide a fuel tank which suppresses excess transfer of fuel in an amount more than needed between a first reservoir portion and a second reservoir portion, at times when the vehicle is being driven around a curve, or when the vehicle is parked on an incline, and which enables the engine to reliably be started by means of a simple structure.

The present invention concerns a fuel tank according to claim 1 comprising a fuel pump, a first reservoir portion in which the fuel pump is arranged and in which a fuel is retained, a second reservoir portion in which the fuel is retained, and a siphon tube disposed across the first reservoir portion and the second reservoir portion, suction being carried out in the siphon tube via the fuel pump.

In the fuel tank, an open end of the siphon tube, which opens into the first reservoir portion, is disposed more toward an outer side of the fuel tank than the fuel pump.

With the present invention, the open end of the siphon tube that opens into the first reservoir portion is disposed more outwardly, i.e., closer to the outer side, than the fuel pump. Owing thereto, when the vehicle is driven around a curve or is parked on an incline, excessive transfer of fuel in an amount more than needed, in particular, from the first reservoir portion in which the fuel pump is disposed to the second reservoir portion, can be prevented from occurring. Accordingly, by means of a simple structure, fuel can reliably be supplied to the engine via the fuel pump, and the start-up performance of the engine can suitably be improved.

The above objects, features and advantages shall be made clearer from the following explanation of a preferred embodiment of the invention, presented in conjunction with the appended drawings.

### Brief Description of Drawings

FIG. 1 is a schematic structural view of a fuel supply system, in which a fuel tank according to an embodiment of the invention is incorporated;
FIG. 2 is a view describing the fuel tank in a condition when it is shipped from the factory;
FIG. 3 is a view describing the fuel tank in a condition when the vehicle is parked on an incline, or when the vehicle is being driven around a curve;
FIG. 4 is a view describing the fuel tank in a condition when the vehicle is being driven in a continuously revolving manner; and

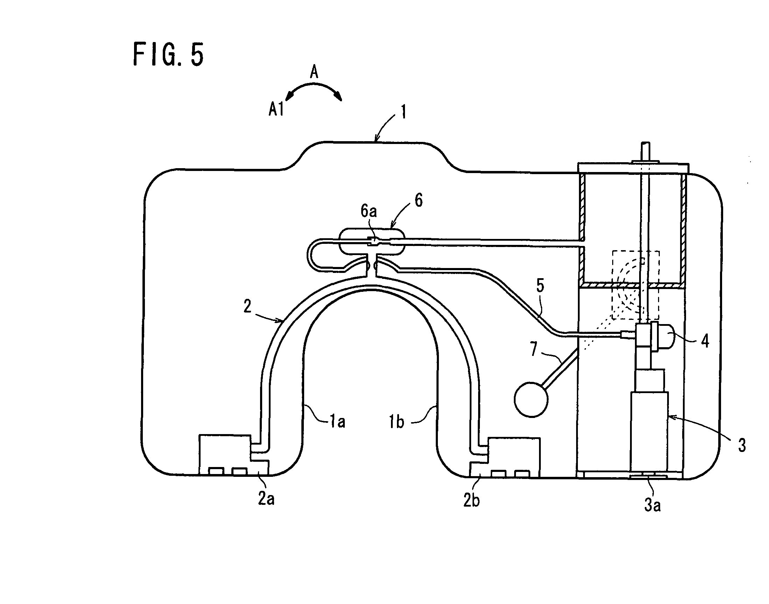

FIG. 5 is a view describing a fuel tank level balancing device as disclosed in Japanese Laid-Open Patent Publication No. 10-061515.

### Description of Embodiments

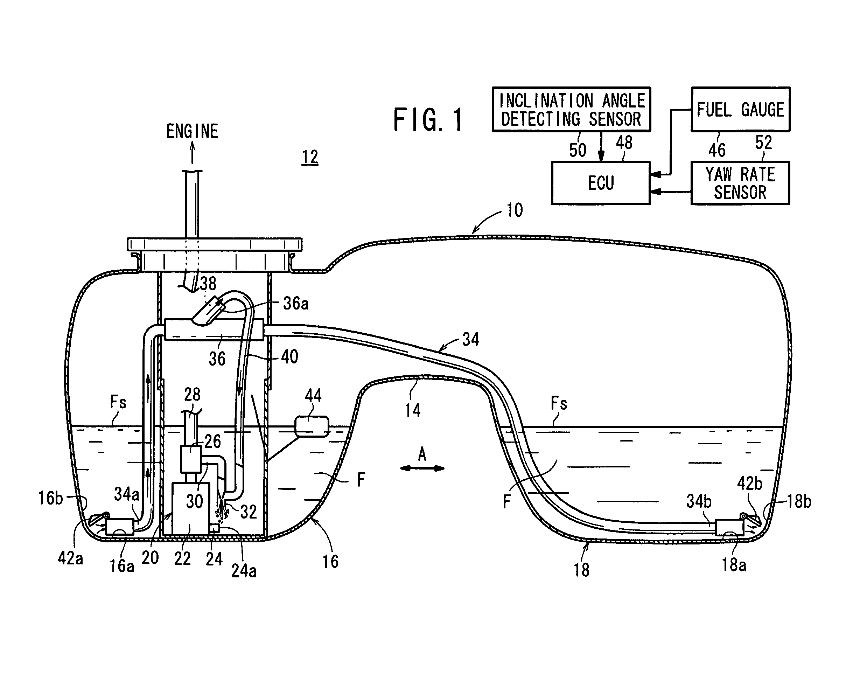

As shown in FIG. 1, a fuel tank 10 according to an embodiment of the present invention is incorporated into a fuel supply system 12. The fuel tank 10 is constructed as a saddle-type fuel tank, and is mounted onto a non-illustrated vehicle. An upwardly curved saddle portion 14 is disposed in a substantially central bottom part in the vehicle widthwise direction (the direction of the arrow A) of the fuel tank 10. A main tank portion (first reservoir portion) 16 and a sub-tank portion (second reservoir portion) 18 are formed by the saddle portion 14.

A fuel pump module 20 is disposed in the main tank portion 16. A fuel pump 22 constituting part of the fuel pump module 20 is equipped with a pumping jet pump 24, having a fuel suction inlet 24a that opens at a bottom part 16a of the main tank portion 16, whereas a pressure regulator 26 is connected on an outlet side of the fuel pump 22.

The pressure regulator 26 supplies fuel F to a non-illustrated engine via a fuel pipeline 28 and comprises a suction branching pipe 30. On one end (lower end) of the suction branching pipe 30, a suction jet pump 32 is provided.

Inside the fuel tank 10, a siphon tube 34 is arranged across each of bottom parts 16a, 18a of the main tank portion 16 and the sub-tank portion 18. A three-way joint 36 is disposed at a midway upper side portion of the siphon tube 34, and in the three-way joint 36, a suction connector 36a is arranged, in which a backflow prevention valve 38 is disposed. One end of a suction tube 40 is connected to the suction connector 36a, and the other end of the suction tube 40 is connected to a suction side (negative pressure side) of the suction jet pump 32.

An open end 34a of the siphon tube 34 on the side of the main tank portion 16 is disposed more toward the outer side than the suction jet pump 32, or more specifically, is disposed on the bottom part 16a of the main tank portion 16 adjacent to an outside inner wall 16b, which is separated from the sub-tank portion 18. A switching valve 42a is installed in the open end 34a. The switching valve 42a closes the open end 34a upon detection of air, while on the other hand, causes the open end 34a to be opened upon detection of fluid therein.

An open end 34b of the siphon tube 34 on the side of the sub-tank portion 18, in a similar manner, is disposed on the bottom part 18a of the sub-tank portion 18 adjacent to an outside inner wall 18b, which is separated from the main tank portion 16. In the open end 34b, a switching valve 42b is installed, which is closed upon detection of air, while on the other hand, is opened upon detection of liquid therein.

A float 44 for detecting the position of a liquid surface Fs of the fuel F stored in the main tank portion 16 is disposed in the fuel pump module 20. A fuel gauge 46, which detects the remaining fuel amount from the liquid surface Fs detected by the float 44, is connected to an ECU (electronic control unit) 48 that serves as a controller. An inclination angle detecting sensor (fuel imbalance condition detector) 50, which detects an inclination angle of the fuel tank 10, and a yaw rate sensor (fuel imbalance condition detector) 52, which detects a yaw rate of the fuel tank 10, are connected to the ECU 48.

Operations of the fuel tank 10 shall be described below in relation to the fuel supply system 12 in which the fuel tank 10 is incorporated.

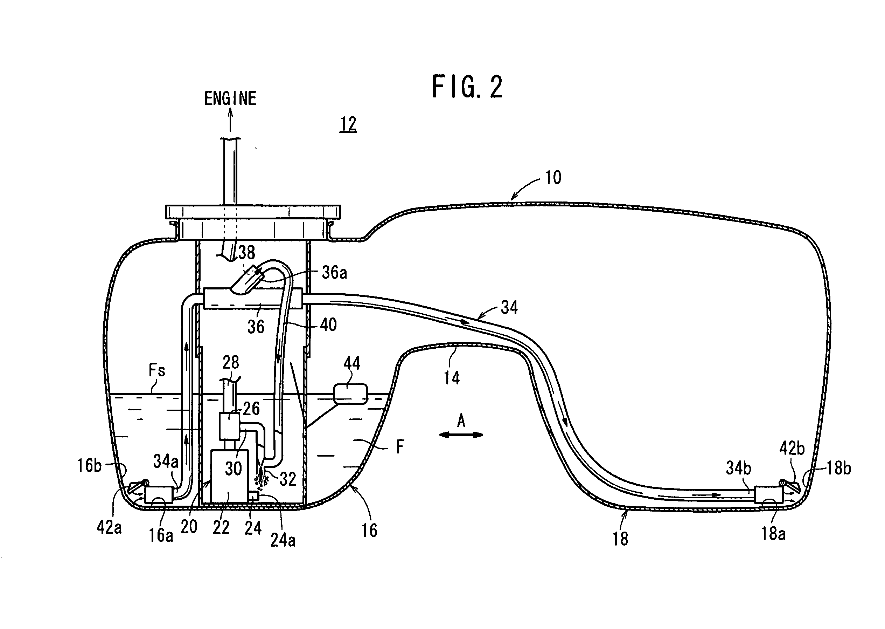

At first, as shown in FIG. 2, for example, when shipped from the factory, start-up of the engine is performed in a state where the fuel F is retained only in the main tank portion 16. Owing thereto, the fuel pump 22 that constitutes the fuel pump module 20 is driven, and the fuel F, which is stored in the main tank portion 16, is drawn in from the fuel suction inlet 24a under an action of the pumping jet pump 24.

The fuel F is supplied to the engine from the pressure regulator 26 and via the fuel pipeline 28. On the other hand, the fuel F is supplied to the suction jet pump 32 via the suction branching pipe 30, whereby a negative pressure is generated in the suction tube 40. The suction tube 40 communicates with the siphon tube 34 via the three-way joint 36, and suction is generated in the interior of the siphon tube 34.

Concerning the siphon tube 34, one open end 34a thereof is disposed inside the fuel F which is retained in the main tank portion 16, whereas the other open end 34b thereof is arranged in the sub-tank portion 18, which contains no fuel F therein, while the switching valve 42b thereof is closed. Accordingly, under an action of the suction jet pump 32, the interior of the siphon tube 34 is subjected to suction, and the fuel F, which is suctioned up from the one open end 34a of the siphon tube 34 is transferred over to the other open end 34b side of the siphon tube 34.

At the open end 34b, as a result of the fuel F being supplied thereto, the switching valve 42b opens and the fuel F from the main tank portion 16 side is delivered to the sub-tank portion 18 side, whereupon a siphoning function is brought about by the siphon tube 34. Owing thereto, respective liquid surfaces Fs of the fuel F in the main tank portion 16 and the fuel F that is transferred into the sub-tank portion 18 arrive at positions having the same height.

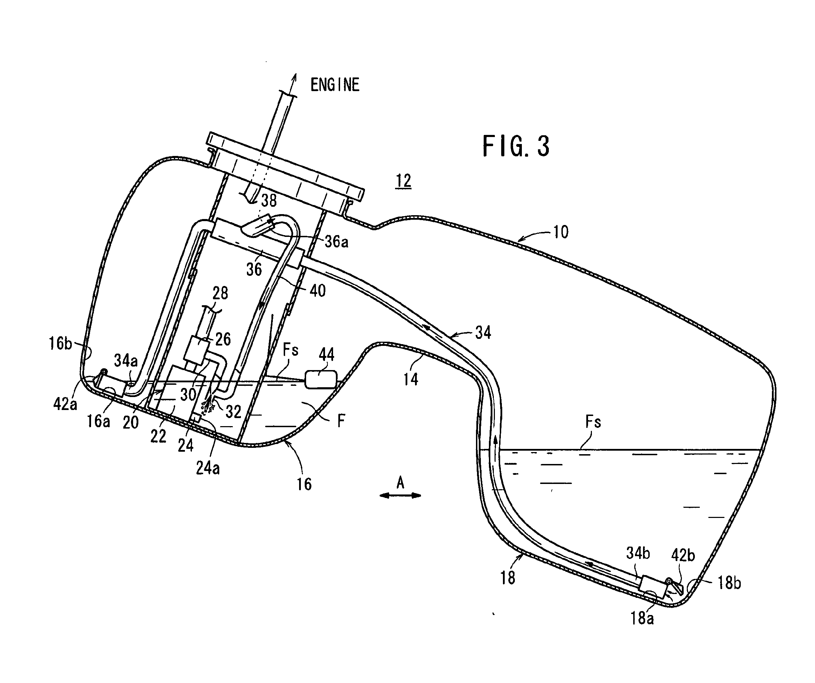

Further, as shown in FIG. 3, when the vehicle is parked on an incline, or when the vehicle is driven around a curve, a condition occurs in which the fuel tank 10 becomes inclined with respect to the vehicle widthwise direction (the direction of arrow A). Accordingly, it is easy for the fuel F retained in the main tank portion 16 and the fuel F maintained in the sub-tank portion 18 to become unbalanced.

Consequently, in a condition where the vehicle is parked on an incline, the inclination angle detecting sensor 50 detects the inclination angle of the fuel tank 10, and when it is judged that the detected inclination angle is equal to or greater than a preset angle (for example, 5° to 6°), detection of the remaining fuel amount by the fuel gauge 46 is regulated for a fixed time only by the ECU 48.

Further, when the vehicle is being driven around a curve, the yaw rate is detected by the yaw rate sensor 52, and when it is judged that the detected yaw rate (horizontal G) is equal to or greater than a preset value (e.g., 0.1 G), detection of the remaining fuel amount by the fuel gauge 46 is regulated for a fixed time only.

Still further, when the inclination angle detected by the inclination angle detecting sensor 50 is equal to or greater than the preset angle, or when the yaw rate detected by the yaw rate sensor 52 is equal to or greater than the preset value, detection of the remaining amount by the fuel gauge 46 is halted for a fixed time only, and when normal conditions are restored and after a predetermined time thereafter (the time required for the fuel in the main tank portion 16 and the sub-tank portion 18 to be placed in balance by the siphon tube 34), detection of the remaining amount can be carried out again.

As a result thereof, by regulating the detection of the remaining fuel amount in cases where a liquid surface difference at or above a prescribed value is generated between the main tank portion 16 and the sub-tank portion 18, errors in detection of the remaining fuel amount can be prevented.

At the inclined condition of the fuel tank 10 shown in FIG. 3, by means of the siphoning effect of the siphon tube 34, the fuel F in the main tank portion 16, which is inclined upwardly, is transferred into the sub-tank portion 18 that is located on the downward side. Owing thereto, the liquid surfaces Fs of the main tank portion 16 and the sub-tank portion 18, respectively, can be adjusted to attain the same position.

Further, when the engine is stopped, under operation of the backflow prevention valve 38, which is arranged in the suction connector 36a of the three-way joint 36, backflow from the suction tube 40 to the side of the siphon tube 34 does not occur. Accordingly, the siphon tube 34 can possess a desired siphoning effect, and the function whereby each of the liquid surfaces Fs of the main tank portion 16 and the sub-tank portion 18 are kept in balance can be continued and maintained.

In this case, according to the present embodiment, the open end 34a of the siphon tube 34 on the side of the main tank portion 16 is arranged more outwardly (more toward the outer side) than the suction jet pump 32. More specifically, both open ends 34a, 34b of the siphon tube 34 are disposed on respective bottom parts 16a, 18a of the main tank portion 16 and the sub-tank portion 18, and further, are disposed adjacent to the outside inner walls 16b, 18b that are separated mutually from each other. Owing thereto, when the main tank portion 16 becomes inclined with the sub-tank portion 18 being oriented downwardly therefrom, the fuel suction inlet 24a of the fuel pump 22 is positioned lower than the open end 34a of the siphon tube 34 (see FIG. 3).

As a result thereof, when the vehicle is being driven around a curve or is parked on an incline, in particular, excessive transfer of the fuel F from the main tank portion 16 in which the fuel pump 22 is disposed into the sub-tank portion 18 can be prevented from occurring. Accordingly, with a simple structure, the fuel F can reliably be supplied to the engine through the fuel pump 22, and the start-up performance of the engine can suitably be improved.

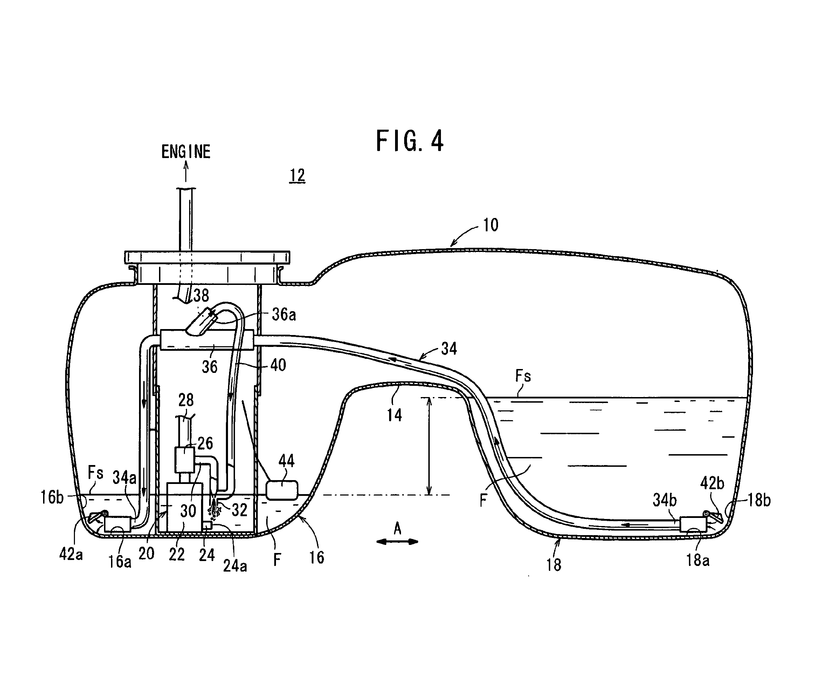

Still further, as shown in FIG. 4, by the vehicle being driven in a continuously revolving manner or the like, a case may occur in which the liquid surfaces Fs inside the fuel tank 10 experience vertical variations. At this time, the switching valves 42a, 42b are installed, respectively, in both open ends 34a, 34b of the siphon tube 34, and the open ends 34a, 34b are opened only at a time when fuel F is present therein. Owing thereto, introduction of air into the interior of the siphon tube 34 is prevented, and a suitable siphoning effect can reliably be maintained.

In addition, by continuously operating the suction jet pump 32 via the fuel pump 22, suction is normally created in the siphon tube 34 via the three-way joint 36. As a result thereof, the siphon tube 34 can reliably and suitably maintain the desired siphoning effect, so that faults in the fuel supply to the engine can be suppressed.

## Claims

1. A fuel tank (10) comprising:
a fuel pump (22);
a first reservoir portion (16) in which the fuel pump (22) is arranged and in which a fuel is retained;
a second reservoir portion (18) in which the fuel is retained; and
a siphon tube (34) disposed across the first reservoir portion (16) and the second reservoir portion (18), suction being carried out in the siphon tube (34) via the fuel pump (22),
wherein an open end (34a) of the siphon tube (34), which opens into the first reservoir portion (16), is disposed more toward an outer side of the fuel tank (10) than the fuel pump (22),
**characterized in that** the fuel tank (10) further comprises:
a fuel imbalance condition detector for detecting a state of imbalance between the fuel of the first reservoir portion (16) and the fuel of the second reservoir portion (18); and
a controller (48) for regulating, for a fixed time only, detection of a remaining fuel amount by a fuel gauge, which is disposed in the first reservoir portion (16) or the second reservoir portion (18), when the state of imbalance in the fuel is detected by the fuel imbalance condition detector.

2. A fuel tank according to claim 1, wherein opposite open ends (34a, 34b) of the siphon tube (34) are disposed respectively on bottom parts (16a, 18a) of the first reservoir portion (16) and the second reservoir portion (18) and adjacent to outside inner walls (16b, 18b), which are separated mutually from each other.

3. A fuel tank according to claim 1, wherein a fuel suction inlet (24a) of the fuel pump (22) is disposed lower than the open end (34a) of the siphon tube (34) when the first reservoir portion (16) is inclined with the second reservoir portion (18) being oriented downwardly therefrom.

4. A fuel tank according to claim 1, wherein a three-way joint (36) for connecting a suction tube (40) is disposed in the siphon tube (34), the suction tube (40) sucking the fuel into the siphon tube (34) by a negative pressure, and a backflow prevention valve (38) is disposed within a connector (36a) of the three-way joint (36).

5. A fuel tank according to claim 1, wherein the fuel imbalance condition detector comprises an inclination angle detecting sensor (50), which detects an angle of inclination of the fuel tank (10), and wherein the state of imbalance in the fuel is determined by the detected angle of inclination being equal to or greater than a preset angle.

6. A fuel tank according to claim 1, wherein the fuel imbalance condition detector comprises a yaw rate sensor (52), which detects a yaw rate of the fuel tank (10), and wherein the state of imbalance in the fuel is determined by the detected yaw rate being equal to or greater than a preset value.

## Patentansprüche

1. Kraftstofftank (10), der aufweist:
eine Kraftstoffpumpe (22);
einen ersten Reservoirabschnitt (16), in dem die Kraftstoffpumpe (22) angeordnet ist und in dem Kraftstoff gespeichert wird;
einen zweiten Reservoirabschnitt (18), in dem Kraftstoff gespeichert wird; und
ein Syphonrohr (34), das über den ersten Reservoirabschnitt (16) und den zweiten Reservoirabschnitt (18) hinweg schräg angeordnet ist, wobei in dem Syphonrohr (34) durch die Kraftstoffpumpe (22) ein Saugvorgang ausgeführt wird,
worin ein offenes Ende (34a) des Syphonrohrs (34), das sich in den ersten Reservoirabschnitt (16) öffnet, weiter zur Außenseite des Kraftstofftanks (10) hin angeordnet ist als die Kraftstoffpumpe (22),
**dadurch gekennzeichnet, dass** der Kraftstofftank (10) ferner aufweist:
einen Kraftstoffungleichgewichtszustandsdetektor zum Detektieren eines Ungleichgewichtszustands zwischen dem Kraftstoff des ersten Reservoirabschnitts (16) und dem Kraftstoff des zweiten Reservoirabschnitts (18); und
einen Controller (48), um nur für ein feste Zeit die Detektion einer Kraftstoffrestmenge durch einen Kraftstoffmesser zu regulieren, der in dem ersten Reservoirabschnitt (16) oder dem zweiten Reservoirabschnitt (18) angeordnet ist, wenn von dem Kraftstoffungleichgewichtszustanddetektor der Ungleichgewichtszustand des Kraftstoffs detektiert wird.

2. Kraftstofftank nach Anspruch 1, worin entgegengesetzte offene Enden (34a, 34b) des Syphonrohrs (34) jeweils an Bodenteilen (16a, 18a) des ersten Reservoirabschnitts (16) und des zweiten Reservoirabschnitts (18) und benachbart zu Außenseiteninnenwänden (16b, 18b), die voneinander getrennt sind, angeordnet sind.

3. Kraftstofftank nach Anspruch 1, worin ein Kraftstoffsaugeinlass (24a) der Kraftstoffpumpe (22) niederiger angeordnet ist als das offene Ende (34a) des Syphonrohrs (34), wenn der erste Reservoirsabschnitt (16), mit von dort nach unten orientiertem zweiten Reservoirabschnitt (18), geneigt ist.

4. Kraftstofftank nach Anspruch 1, worin ein Drei-Wege-Verbinder (36) zum Verbinden eines Saugrohrs (40) in dem Syphonrohr (34) angeordnet ist, wobei das Saugrohr (40) den Kraftstoff durch Unterdruck in das Syphonrohr (34) ansaugt, und ein Rückflussverhinderungsventil (38) innerhalb eines Anschlusses (36a) des Drei-Wege-Verbinders (36) angeordnet ist.

5. Kraftstofftank nach Anspruch 1, worin der Kraftstoffungleichgewichtszustanddetektor einen Neigungswinkeldetektionssensor (50) aufweist, der einen Neigungswinkel des Kraftstofftanks (10) detektiert, worin der Ungleichgewichtszustand in dem Kraftstoff dadurch bestimmt wird, dass der detektierte Neigungswinkel gleich oder größer als ein vorbestimmter Neigungswinkel ist.

6. Kraftstofftank nach Anspruch 1, worin der Kraftstoffungleichgewichtszustanddetektor einen Gierratensensor (52) aufweist, der eine Gierrate des Kraftstofftanks (10) detektiert, und worin der Ungleichgewichtszustand in dem Kraftstoff dadurch bestimmt wird, dass die detektierte Gierrate gleich oder größer als ein vorbestimmter Wert ist.

## Revendications

1. Réservoir de combustible (10), comprenant:
une pompe à combustible (22);
une première partie de réservoir (16) dans laquelle la pompe à combustible (22) est agencée et dans laquelle un combustible est retenu;
une deuxième partie de réservoir (18) dans laquelle le combustible est retenu; et
un tube de siphon (34) qui est disposé en travers de la première partie de réservoir (16) et de la deuxième partie de réservoir (18), une aspiration étant exécutée dans le tube de siphon (34) par l'intermédiaire de la pompe à combustible (22),
dans lequel une extrémité ouverte (34a) du tube de siphon (34), qui s'ouvre dans la première partie de réservoir (16), est disposée plus en direction d'un côté extérieur du réservoir de combustible (10) qu'en direction de la pompe à combustible (22),
**caractérisé en ce que** le réservoir de combustible (10) comprend en outre:
un détecteur de condition de déséquilibre de combustible pour détecter un état de déséquilibre entre le combustible de la première partie de réservoir (16) et le combustible de la deuxième partie de réservoir (18); et
un dispositif de commande (48) pour réguler, pendant une période de temps fixe seulement, la détection d'une quantité de combustible restante par une jauge de combustible qui est disposée dans la première partie de réservoir (16) ou dans la deuxième partie de réservoir (18) lorsque l'état de déséquilibre dans le combustible est détecté par le détecteur de condition de déséquilibre de combustible.

2. Réservoir de combustible selon la revendication 1, dans lequel des extrémités ouvertes opposées (34a, 34b) du tube de siphon (34) sont disposées respectivement sur des parties inférieures (16a, 18a) de la première partie de réservoir (16) et de la deuxième partie de réservoir (18) et à proximité de l'extérieur des parois intérieures (16b, 18b) qui sont séparées mutuellement l'une de l'autre.

3. Réservoir de combustible selon la revendication 1, dans lequel une entrée d'aspiration de combustible (24a) de la pompe à combustible (22) est disposée plus bas que l'extrémité ouverte (34a) de tube de siphon (34) lorsque la première partie de réservoir (16) est inclinée avec la deuxième partie de réservoir (18) qui est orientée vers le bas à partir de celle-ci.

4. Réservoir de combustible selon la revendication 1, dans lequel un joint à trois voies (36) pour connecter un tube d'aspiration (40) est disposé dans le tube de siphon (34), le tube d'aspiration (40) aspirant le combustible dans le tube de siphon (34) par une pression négative, et un clapet anti-reflux (38) est disposé à l'intérieur d'un connecteur (36a) du joint à trois voies (36).

5. Réservoir de combustible selon la revendication 1, dans lequel le détecteur de condition de déséquilibre comprend un capteur de détection d'angle d'inclinaison (50) qui détecte un angle d'inclinaison du réservoir de combustible (10), et dans lequel l'état de déséquilibre dans le combustible est déterminé par l'angle d'inclinaison détecté qui est égal ou supérieur à un angle prédéfini.

6. Réservoir de combustible selon la revendication 1, dans lequel le détecteur de condition de déséquilibre de combustible comprend un capteur de vitesse de lacet (52) qui détecte un taux de lacet du réservoir de combustible (10), et dans lequel l'état de déséquilibre dans le combustible est déterminé par le taux de lacet détecté qui est égal ou supérieur à une valeur prédéfinie.
